# EUROPEAN PATENT APPLICATION

(11) **EP 1 860 669 A1**
(43) Date of publication of application: **28.11.2007**
(21) Application number: 06010596.2
(22) Date of filing: 23.05.2006
(51) Int. Cl.: H01F 7/16, H02K 33/02, H02K 33/16, H01F 7/08

(54) **Current-controlled/driven compensating/strengthening device**

(71) Applicant: LIU, Ming-Hwa, Taiwan (TW); CHEN, Brian D.F., Taiwan (TW); Chien, Chin-Pang, Chia Yih Hsien (TW)
(72) Inventor: LIU, Ming-Hwa, Taiwan (TW); CHEN, Brian D.F., Taiwan (TW); Chien, Chin-Pang, Chia Yih Hsien (TW)
(74) Representative: Reichel, Wolfgang

(57) **Abstract**

The present invention relates to an actuator device including a chamber (11), a driven piece (12), a coil (13) and at least one compensator (14, 15). The driven piece (12) has a certain length and a shape corresponding to the shape of the interior of the chamber (11). The driven piece (12) is movably disposed in the chamber (11). The coil (13) is arranged around the chamber (11) and connected with a circuit for providing current for the coil (13) to drive and move the driven piece. The compensator (14, 15) is disposed on outer side of the chamber (11). When the coil (13) is powered on, the compensator (14, 15) serves to compensate and strengthen the magnetic line acting on the driven piece. Accordingly, the action force applied to the driven piece (12) is strengthened.

## Description

The present invention relates to a device for compensating magnetic line, and more particularly to an actuator device.

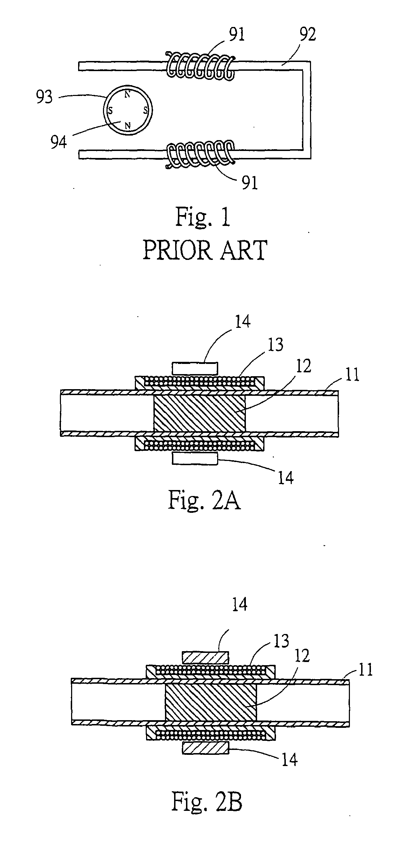

Many apparatuses are used to drive work pieces by means of current, such as motors, rotary pumps, relays and magnetic accelerators. Such apparatus generally includes a set of coils and a magnetic member. When the coils are powered to create a magnetic field, the magnetic member is moved relative to the coils. Fig. 1 shows a rotary pump including two coils 91, a U-shaped magnetic conductor 92, a chamber 93 and a magnetic rotor 94. The coils 91 are wound on the magnetic conductor 92 and connected with a circuit (not shown). The chamber 93 is positioned between two ends of the magnetic conductor 92. The rotor 94 is shafted in the chamber 93. A waterwheel (not shown) is disposed at one end of the rotor 94. After the coils 91 is powered on, the magnetic poles of the two ends of the magnetic conductor 92 will repel the rotor 94 to rotate for pumping a fluid.

US Patent No. 6364003 discloses a linearly movable pump. Five magnets are arranged in a chamber formed with several perforations. A coil with alternate current is used to drive one of the magnets to reciprocally move for alternately pumping two fluids.

In the above motor or pump, the magnetic rotor or magnets are rotated or moved by magnetic force. The driving force (horsepower) can be only increased by means of increasing the current, increasing the number of the loops of the coil or increasing the magnetism of the magnets.

The object underlying the present invention is to provide an actuator device enhancing action force and saving power.

According to the invention, the actuator device includes a chamber, a driven piece, a coil and at least one compensator. The driven piece has a certain length and a shape corresponding to the shape of the interior of the chamber. The driven piece is movably disposed in the chamber. The coil is arranged around the chamber and connected with a circuit for providing current for the coil to drive and move the driven piece. The compensator is disposed on outer side of the chamber.

Advantageously, the action force applied to the driven piece 12 by the coil can be compensated/strengthened without increasing the current, increasing the number of the loops of the coil or increasing the magnetism of the driven piece.

Preferred embodiments of the present invention are given in the dependent claims 2 to 22.

Embodiments of the invention will now be described, by the way of example only, with reference to the following drawings in which:
Fig. 1 is a view of a conventional rotary pump;
Fig. 2A is a sectional view of a first embodiment of the present invention;
Fig. 2B is a sectional view of a second embodiment of the present invention;
Fig. 3A is a sectional view of a third embodiment of the present invention;
Fig. 3B is a sectional view of a fourth embodiment of the present invention;
Fig. 4A is a sectional view of a fifth embodiment of the present invention;
Fig. 4B is a sectional view of a sixth embodiment of the present invention;
Fig. 5A is a sectional view of a seventh embodiment of the present invention;
Fig. 5B is a sectional view of an eighth embodiment of the present invention;
Fig. 6A is a sectional view of a ninth embodiment of the present invention;
Fig. 6B is a sectional view of a tenth embodiment of the present invention;
Fig. 7 is a sectional view of an eleventh embodiment of the present invention;
Fig. 8 is a sectional view of a twelfth embodiment of the present invention;
Fig. 9 is a view of a thirteenth embodiment of the present invention;
Fig. 10A and Fig. 10B show a magnetic line distribution diagram and a magnetic-flux-density distribution diagram achieved by means of analyzing the structure of Fig. 8 with FLUX2D limited software; and
Fig. 11 shows an electromagnetic force-driven piece position comparison diagram achieved by means of analyzing the structure of Fig. 8 with FLUX2D limited software, wherein + means no magnet shell (i.e. without a compensator) and Q means magnet shell (i.e. with a compensator).

Referring to Figs. 2A and 2B. The actuator device of the present invention includes a chamber 11, a driven piece 12, a coil 13 and at least one compensator.

The driven piece 12 has a certain length and a shape corresponding to the shape of the interior of the chamber 11. The driven piece 12 is movably disposed in the chamber 11. The driven piece 12 is a magnet or a magnetizable material such as iron, cobalt, nickel, non-crystalline material and superconductor.

The coil 13 is arranged around the chamber 11 or outer side of the chamber 11 and connected with a circuit. The circuit provides current for the coil 13 to drive and move the driven piece 12, for example, reciprocally move the driven piece 12.

The compensator is disposed on outer side of the chamber 11. When the coil 13 is powered on, the compensator serves to compensate and strengthen the magnetic line acting on the driven piece 12. Accordingly, the action force applied to the driven piece 12 is strengthened.

The compensator includes a magnetic body 14. When the coil 13 is powered on, the magnetic line of the magnetic body 14 is conducted by the magnetic line of the coil 13 to compensate and strengthen the magnetic line of the coil 13. Accordingly, the action force applied to the driven piece 12 is strengthened.

Regarding the structure and the principle of the magnetic body 14, it is stated as follows.

Referring to Fig. 2A, the driven piece 12 is a magnet with two magnetic poles positioned on left side and right side (according to the figure). The coil 13 is up and down wound around the chamber 11 (according to the figure). The magnetic poles created by the coil 13 are positioned on left and right sides for driving the driven piece 12 to linearly move. The magnetic body 14 is a block body arranged on outer side of the coil 13. The incoming and outgoing directions of the magnetic line of the magnetic body 14 correspond to the incoming and outgoing directions of the magnetic line of the coil 13. That is, the magnetic poles of the magnetic body 14 are positioned on left and right sides. In the case that the corresponding magnetic poles of the coil 13 and the magnetic body 14 have different polarities, the magnetic line of the magnetic body 14 will be conducted by the magnetic line of the coil 13 to compensate and strengthen the magnetic pole of the coil 13. In other words, two different magnetic poles intersect each other to shorten the magnetic path of each other and strengthen the magnetic force of the magnetic poles. Referring to Fig. 2B, alternatively, the magnetic body 14 can be a hollow cylindrical body fitted around the coil 13. This can achieve the same effect. Still alternatively, the magnetic body 14 can be positioned between the chamber 11 and the coil 13 to achieve the same effect.

Again referring to Fig. 2A, the driven piece 12 is a magnet with two magnetic poles positioned on left side and right side (according to the figure). The coil 13 is up and down wound around the chamber 11 (according to the figure). The magnetic poles created by the coil 13 are positioned on left and right sides for driving the driven piece 12. The magnetic body 14 is a block body arranged on outer side of the coil 13. The incoming and outgoing directions of the magnetic line of the magnetic body 14 correspond to the winding direction of the coil 13. That is, the magnetic poles of the magnetic body 14 are positioned on upper and lower sides (according to the figure). Under such circumstance, the magnetic line of one end of the magnetic body 14 corresponding to the coil 13 will be conducted by the magnetic line of the coil 13 to compensate and strengthen one of the magnetic poles of the coil 13. This can also achieve the above effect. Referring to Fig. 2B, alternatively, the magnetic body 14 can be a hollow cylindrical body fitted around the coil 13. This can achieve the same effect. Still alternatively, the magnetic body 14 can be positioned between the chamber 11 and the coil 13 to achieve the same effect.

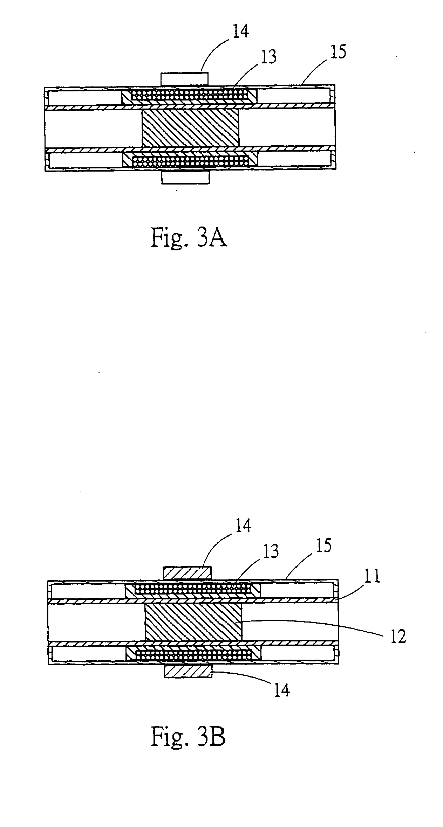

Referring to Fig. 3A according to Fig. 2A, the compensator further includes a magnetic conductor 15 disposed between the coil 13 and the magnetic body 14. The magnetic conductor 15 encloses the coil 13 and the chamber 11 for more effectively conducting the magnetic line and compensating/strengthening the magnetic force.

Referring to Fig. 3B according to Fig. 2B, the compensator further includes a magnetic conductor 15 disposed between the coil 13 and the magnetic body 14. The magnetic conductor 15 encloses the coil 13 and the chamber 11 for more effectively conducting the magnetic line and compensating/strengthening the magnetic force.

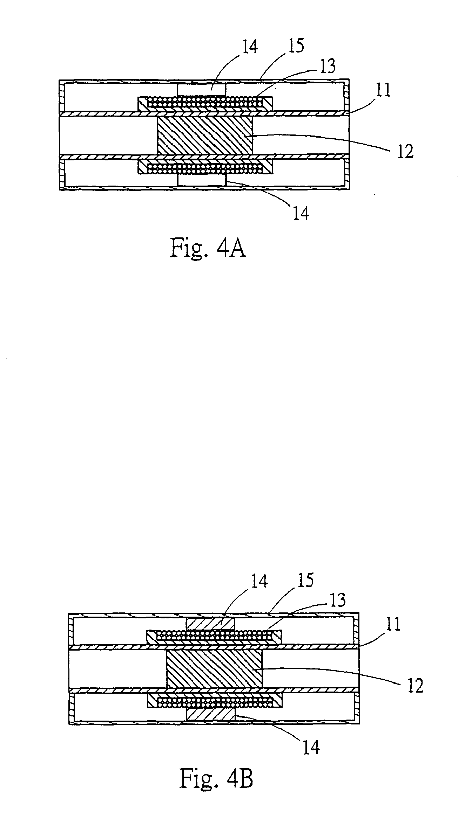

Referring to Fig. 4A according to Fig. 3A, the magnetic body 14 and the magnetic conductor 15 can be switched, whereby the magnetic body 14 is disposed between the coil 13 and the magnetic conductor 15.

Referring to Fig. 4B according to Fig. 3B, the magnetic body 14 and the magnetic conductor 15 can be switched, whereby the magnetic body 14 is disposed between the coil 13 and the magnetic conductor 15.

Referring to Fig. 5A according to Fig. 4A, the coil 13 can be alternatively disposed around the magnetic conductor 15. Accordingly, the magnetic conductor 15 encloses the magnetic body 14 and the chamber 11.

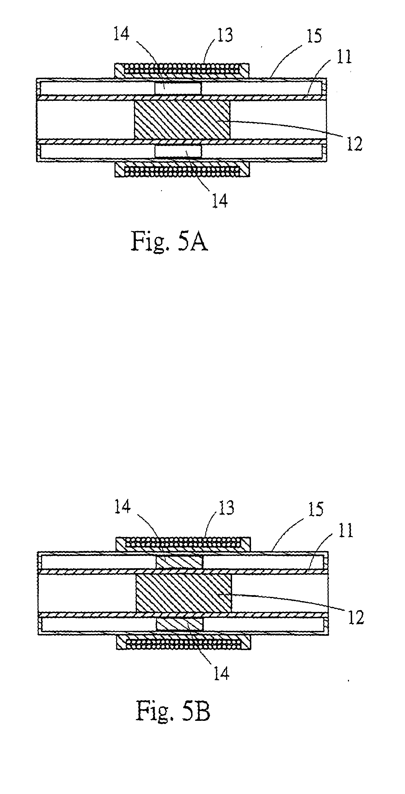

Referring to Fig. 5B according to Fig. 4B, the coil 13 can be alternatively disposed around the magnetic conductor 15. Accordingly, the magnetic conductor 15 encloses the magnetic body 14 and the chamber 11.

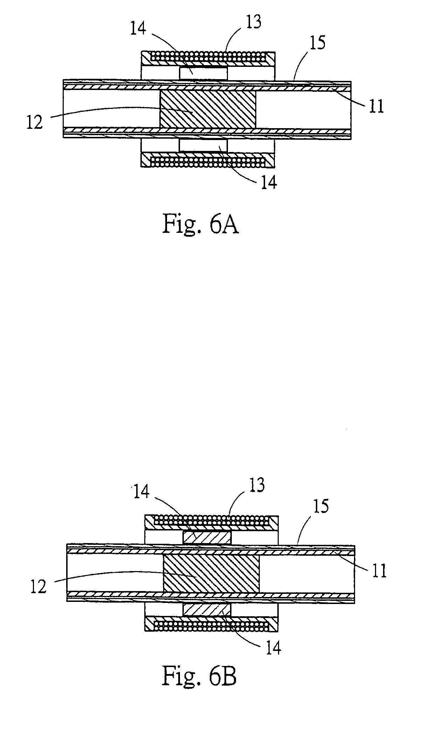

Referring to Fig. 6A according to Fig. 5A, the magnetic body 14 can be alternatively disposed between the coil 13 and the magnetic conductor 15. Accordingly, the magnetic conductor 15 encloses the chamber 11.

Referring to Fig. 6B according to Fig. 5B, the magnetic body 14 can be alternatively disposed between the coil 13 and the magnetic conductor 15. Accordingly, the magnetic conductor 15 encloses the chamber 11.

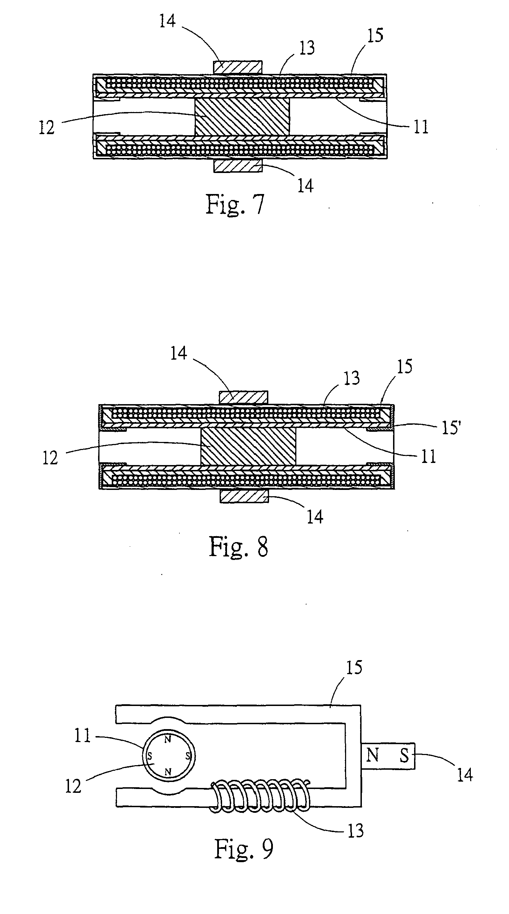

Fig. 7 shows another structure of the magnetic conductor 15. The chamber 11 has two open ends. Two ends of the magnetic conductor 15 are bent to extend through the open ends of the chamber 11 into the interior of the chamber 11 by a certain depth. The magnetic conductor 15 with such structure can also conduct the magnetic path to achieve the above effect. The structure of the magnetic conductor 15 of Fig. 7 is derived from the magnetic conductor of Fig. 3A.

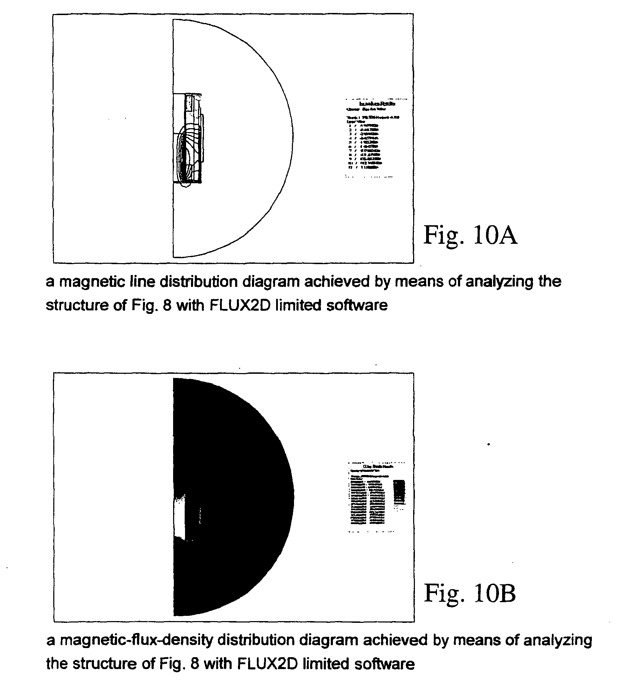

Fig. 8 shows still another structure of the magnetic conductor 15. The chamber 11 has two open ends. Another magnetic conductor 15' is disposed at each open end of the chamber 11. One end of the magnetic conductor 15' extends into the interior of the chamber 11, while the other end of the magnetic conductor 15' abuts against the magnetic conductor 15. The structure of the magnetic conductor 15 of Fig. 8 is derived from the magnetic conductor of Fig. 3A.

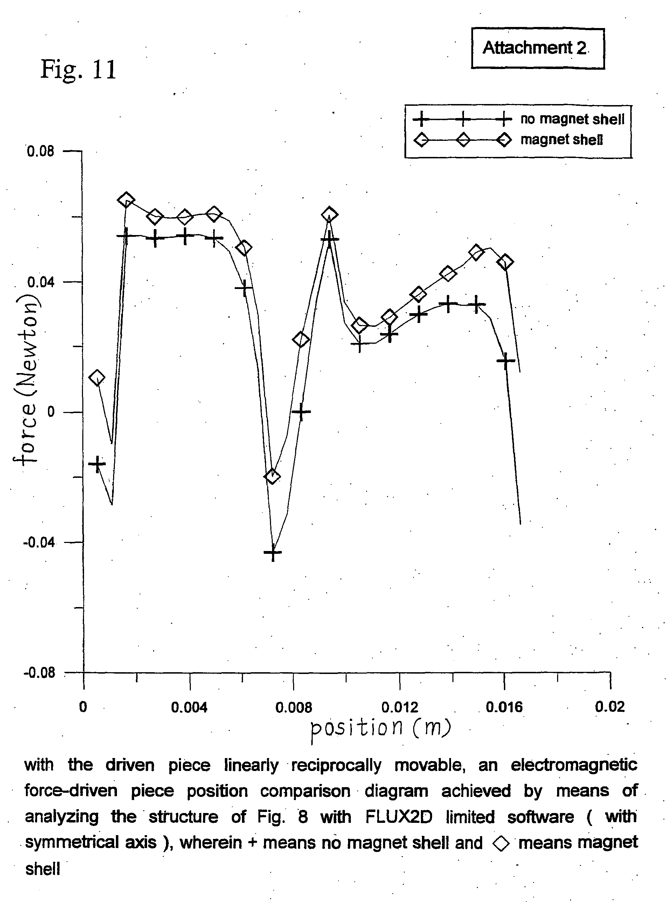

The structure of Fig. 8 is analyzed with FLUX2D limited software to achieve a magnetic line distribution diagram and a magnetic-flux-density distribution diagram (as shown in Fig. 10A and Fig. 10B) and electromagnetic force-driven piece position comparison diagram (as shown in Fig. 11), wherein + means no magnet shell (i.e. without the compensator) and 0 means magnet shell (i.e. with the compensator). It can be known from Attachments 1 and 2 that the magnetic line of the magnetic body 14 of the present invention can be conducted by the magnetic line of the coil 13 to achieve a compensating/strengthening effect.

Fig. 9 shows still another structure of the magnetic conductor 15 of the present invention for rotating the driven piece 12.

The magnetic conductor 15 is a bent bar body having an unclosed shape with an opening. The chamber 11 is positioned between two ends of the magnetic conductor 15. The coil 13 is wound around a middle section of the magnetic conductor 15. The driven piece 12 is a magnet shafted in the chamber 11 or magnetically floated in the chamber 11. The magnetic body 14 abuts against the coil 13 or the magnetic conductor 15. The incoming and outgoing directions of the magnetic line of the magnetic body 14 correspond to the incoming and outgoing directions of the magnetic line of the coil 13 or correspond to the winding direction of the coil 13. Such arrangement can also achieve the above compensating/strengthening effect. Moreover, another coil can be wound around a middle section of the magnetic conductor 15 and connected with the circuit to achieve the compensating/strengthening effect.

With respect to the linearly movable driven piece 12 which is a magnet, when the magnet passes through the interior of the coil 13, another current is induced. The present invention can further include a feedback circuit for feeding the other current back to the circuit to enhance the compensating/strengthening effect.

According to the above arrangement, the actuator device of the present invention has the following advantages:
1. By means of the magnetic body 14, the action force applied to the driven piece 12 by the coil 13 can be compensated/strengthened without increasing the current, increasing the number of the loops of the coil or increasing the magnetism of the driven piece 12.
2. In the case that the driven piece 12 is a magnet, when the magnet passes through the interior of the coil 13, another current (backward electric potential) is induced to save the current provided by the circuit. The magnetic body 14 serves to provide the compensating/strengthening effect without reducing the action force applied to the driven piece 12 by the coil 13.

With the magnetic conductor 15, the magnetic body 14 of the actuator device of the present invention is omissible. Under such circumstance, the magnetic conductor 15 forms a magnetic path, whereby the magnetic line of the coil 13 is effectively conducted by the magnetic conductor 15 to compensate/strengthen the magnetic line of the coil 13. Accordingly, the action force applied to the driven piece 12 can be enhanced.

The above embodiments are only used to illustrate the present invention, not intended to limit the scope thereof. Many modifications of the above embodiments can be made without departing from the spirit of the present invention.

## Claims

1. An actuator device comprising:
a chamber (11);
a driven piece (12) having a certain length and a shape corresponding to a shape of the interior of the chamber (11), the driven piece (12) being movably disposed in the chamber (11);
a coil (13) arranged around the chamber (11) and connected with a circuit for providing current for the coil (13) to drive and move the driven piece;
at least one compensator (14, 15) disposed on outer side of the chamber (11), whereby when the coil (13) is powered on, the compensator (14, 15) compensates and strengthens magnetic line acting on the driven piece.

2. The actuator device as claimed in claim 1, wherein the compensator (14, 15) includes a magnetic body, the incoming and outgoing directions of the magnetic line of the magnetic body corresponding to the incoming and outgoing directions of the magnetic line of the coil (13).

3. The actuator device as claimed in claim 1, wherein the compensator (14, 15) includes a magnetic body, the incoming and outgoing directions of the magnetic line of the magnetic body corresponding to the winding direction of the coil (13).

4. The actuator device as claimed in claim 3, wherein the compensator (14, 15) further includes a magnetic conductor, the magnetic conductor being disposed on outer side of the coil (13) to enclose the coil (13) and the chamber (11).

5. The actuator device as claimed in claim 4, wherein the chamber (11) has two open ends, two ends of the magnetic conductor being bent to extend through the open ends of the chamber (11) into the interior of the chamber (11) by a certain depth.

6. The actuator device as claimed in claim 4, wherein the chamber (11) has two open ends, another magnetic conductor being disposed at each open end of the chamber (11), one end of the other magnetic conductor extending into the interior of the chamber (11), while the other end of the other magnetic conductor abutting against the magnetic conductor.

7. The actuator device as claimed in claim 4, 5 or 6, wherein the magnetic body is disposed on outer side of the magnetic conductor.

8. The actuator device as claimed in claim 4, 5 or 6, wherein the magnetic body is disposed between the coil (13) and the magnetic conductor.

9. The actuator device as claimed in claim 3, wherein the compensator (14, 15) further includes a magnetic conductor, the magnetic conductor being disposed between the coil (13) and the chamber (11) to enclose the chamber (11).

10. The actuator device as claimed in claim 9, wherein the chamber (11) has two open ends, two ends of the magnetic conductor being bent to extend through the open ends of the chamber (11) into the interior of the chamber (11) by a certain depth.

11. The actuator device as claimed in claim 9, wherein the chamber (11) has two open ends, another magnetic conductor being disposed at each open end of the chamber (11), one end of the other magnetic conductor extending into the interior of the chamber (11), while the other end of the other magnetic conductor abutting against the magnetic conductor.

12. The actuator device as claimed in claim 9, 10, 11, wherein the magnetic body is disposed between the chamber (11) and the magnetic conductor.

13. The actuator device as claimed in claim 9, 10, 11, wherein the magnetic body is disposed between the coil (13) and the magnetic conductor.

14. The actuator device as claimed in claim 2, wherein the compensator (14, 15) further includes a magnetic conductor, the magnetic conductor being a bent bar body having an unclosed shape with an opening, the chamber (11) being positioned between two ends of the magnetic conductor, the coil (13) being wound around a middle section of the magnetic conductor.

15. The actuator device as claimed in claim 3, wherein the compensator (14, 15) further includes a magnetic conductor, the magnetic conductor being a bent bar body having an unclosed shape with an opening, the chamber (11) being positioned between two ends of the magnetic conductor, the coil (13) being wound around a middle section of the magnetic conductor.

16. The actuator device as claimed in claim 14 or 15, further comprising another coil (13) wound around a middle section of the magnetic conductor.

17. The actuator device as claimed in claim 1, further comprising a feedback circuit, wherein the driven piece (12) is a magnet, whereby when the magnet passes through the interior of the coil (13), another current is induced, the feedback circuit serving to feed the other current back to the circuit to enhance the compensating/strengthening effect.

18. The actuator device as claimed in claim 1, wherein the compensator (14, 15) includes a magnetic conductor disposed on outer side of the chamber (11), whereby when the coil (13) is powered on, the magnetic line of the coil (13) is conducted by the magnetic conductor.

19. The actuator device as claimed in claim 18, wherein the magnetic conductor is disposed on outer side of the coil (13) to enclose the coil (13) and the chamber (11).

20. The actuator device as claimed in claim 18, wherein the magnetic conductor is disposed between the coil (13) and the chamber (11) to enclose the chamber (11).

21. The actuator device as claimed in claim 19 or 20, wherein the chamber (11) has two open ends, two ends of the magnetic conductor being bent to extend through the open ends of the chamber (11) into the interior of the chamber (11) by a certain depth.

22. The actuator device as claimed in claim 19 or 20, wherein the chamber (11) has two open ends, another magnetic conductor being disposed at each open end of the chamber (11), one end of the other magnetic conductor extending into the interior of the chamber (11), while the other end of the other magnetic conductor abutting against the magnetic conductor.
